(19) Europäisches Patentamt
European Patent Office
Office européen des brevets

(11) **EP 4 108 531 A1**

(12) **EUROPEAN PATENT APPLICATION**

(43) Date of publication:
**28.12.2022 Bulletin 2022/52**

(21) Application number: **22162063.6**

(22) Date of filing: **15.03.2022**

(51) International Patent Classification (IPC):
*B60W 10/04* (2006.01)   *B60W 10/184* (2012.01)
*B60W 10/20* (2006.01)   *B60W 30/02* (2012.01)
*B60W 30/095* (2012.01)   *B60W 30/14* (2006.01)
*B60W 30/18* (2012.01)   *B60W 50/14* (2020.01)
*B60K 31/00* (2006.01)

(52) Cooperative Patent Classification (CPC):
**B60W 30/02; B60W 10/04; B60W 10/184;**
**B60W 10/20; B60W 30/0956; B60W 30/146;**
**B60W 30/18145; B60W 50/0097; B60W 50/14;**
B60K 2031/0091; B60W 2510/207; B60W 2520/10;
B60W 2530/20; B60W 2552/30; B60W 2552/40;

(Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **24.06.2021 US 202117356545**

(71) Applicant: **Intel Corporation**
**Santa Clara, CA 95054 (US)**

(72) Inventors:
• BUERKLE, Cornelius
  76137 Karlsruhe (DE)
• OBORIL, Fabian
  75139 Karlsruhe (DE)

(74) Representative: **Viering, Jentschura & Partner**
**mbB**
**Patent- und Rechtsanwälte**
**Am Brauhaus 8**
**01099 Dresden (DE)**

(54) **PROACTIVE VEHICLE SAFETY SYSTEM**

(57)    A vehicle control system for proactively calculating a safe motion range (e.g., safe speed, a safe acceleration, and/or a safe jerk range) for a road segment and selecting and verifying an appropriate domain for the vehicle using information about the current road segment, information about the next road segment(s), information obtained from sensors, information obtained from map systems, information from an object-based safety layer, and other information about the vehicle's operating conditions in the current and future road segments. In addition, once the safe motion range is calculated, this information may be used to either warn/inform a human driver or directly enforce an appropriate vehicle maneuver to ensure a safe motion in the vehicle's next road segment(s).

FIG. 5

**(Cont. next page)**

(52) Cooperative Patent Classification (CPC): (Cont.)
B60W 2554/801; B60W 2554/802;
B60W 2555/20; B60W 2555/60; B60W 2556/45;
B60W 2556/50; B60W 2720/10; B60W 2720/106;
B60W 2720/125; B60W 2756/10; G06V 20/56

## Description

## Technical Field

The disclosure relates generally to vehicle safety systems, and in particular, to vehicle safety systems for autonomous vehicles, partially autonomous vehicles, driver-assisted vehicles, and vehicles with safety warning systems.

## Background

Today's vehicles, and in particular, autonomous or partially autonomous vehicles, use a variety of inputs, sensors, and other information to detect and react to objects near the vehicle. Such reactive systems are designed to improve the safety of the vehicle with respect to detected objects.

## Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary aspects of the disclosure are described with reference to the following drawings, in which:

FIGs. 1A and 1B show exemplary diagrams of a vehicle traveling on road segments;
FIG. 2 shows a schematic drawing illustrating an exemplary vehicle control system for proactively controlling a vehicle; and
FIG. 3 depicts an exemplary vehicle control system for proactively controlling a vehicle.
FIG. 4 depicts an exemplary vehicle control system and processor for proactively controlling a vehicle.
FIG. 5 shows a schematic flow diagram for proactively controlling a vehicle.

## Description

The following detailed description refers to the accompanying drawings that show, by way of illustration, exemplary details and features.
The word "exemplary" is used herein to mean "serving as an example, instance, or illustration". Any aspect or design described herein as "exemplary" is not necessarily to be construed as preferred or advantageous over other aspects or designs.
Throughout the drawings, it should be noted that like reference numbers are used to depict the same or similar elements, features, and structures, unless otherwise noted.
The phrase "at least one" and "one or more" may be understood to include a numerical quantity greater than or equal to one (*e.g.,* one, two, three, four, [...], etc.). The phrase "at least one of' with regard to a group of elements may be used herein to mean at least one element from the group consisting of the elements. For example, the phrase "at least one of' with regard to a group of elements may be used herein to mean a selection of: one of the listed elements, a plurality of one of the listed elements, a plurality of individual listed elements, or a plurality of a multiple of individual listed elements.
The words "plural" and "multiple" in the description and in the claims expressly refer to a quantity greater than one. Accordingly, any phrases explicitly invoking the aforementioned words (*e.g.,* "plural [elements]", "multiple [elements]") referring to a quantity of elements expressly refers to more than one of the said elements. For instance, the phrase "a plurality" may be understood to include a numerical quantity greater than or equal to two (*e.g.,* two, three, four, five, [...], etc.).
The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.
The term "data" as used herein may be understood to include information in any suitable analog or digital form, *e.g.,* provided as a file, a portion of a file, a set of files, a signal or stream, a portion of a signal or stream, a set of signals or streams, and the like. Further, the term "data" may also be used to mean a reference to information, *e.g.,* in form of a pointer. The term "data", however, is not limited to the aforementioned examples and may take various forms and represent any information as understood in the art.
The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, *e.g.,* any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (*e.g.,* a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPoint™, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

A "vehicle" may be understood to include any type of driven object. By way of example, a vehicle may be a driven object with a combustion engine, a reaction engine, an electrically driven object, a hybrid driven object, or a combination thereof. A vehicle may be or may include an automobile, a bus, a mini bus, a van, a truck, a mobile home, a vehicle trailer, a motorcycle, a bicycle, a tricycle, a train locomotive, a train wagon, a moving robot, a personal transporter, a boat, a ship, a submersible, a submarine, a drone, an aircraft, or a rocket, among others.

The apparatuses and methods described herein may be implemented using a hierarchical architecture, *e.g.,* by introducing a hierarchical prioritization of usage for different types of users (*e.g.,* low/medium/high priority, etc.), based on a prioritized access to the spectrum (*e.g.,* with highest priority given to tier-1 users, followed by tier-2, then tier-3, etc.).

Today's vehicles, and in particular autonomous or partially autonomous vehicles, are equipped with safety monitoring systems that may warn a driver or may assist a driver in reacting to objects that may appear in the vehicle's vicinity. Vehicles use a variety of inputs, sensors, and other information to detect nearby objects and then the vehicle's safety systems make decisions based on those inputs for how the car may safely react to the detected object. While such reaction-based systems are designed to improve the safety of the vehicle, current solutions are incapable of providing safe driving in all situations, especially in situation that do not involve other objects.

One example of a conventional reaction-based systems is the responsibility-sensitive safety (RSS) approach. RSS is a mathematical model that defines a safety envelope and specific criteria to judge if a particular driving situation (e.g., the constellation of a vehicle (e.g., the subject vehicle or ego vehicle) in relation to other objects, such as another vehicle, on the road) is safe or not. If the situation is not safe, appropriate counteractions (e.g., braking, steering adjustment, etc.) are defined for the ego vehicle to react in order to improve the unsafe situation to a safe one. However, RSS analyzes only constellations of objects (e.g., objects in relation to one another) to verify, for example, whether the ego vehicle, in relation to the other objects in the constellation, is in a safe or unsafe arrangement.

Yet, reacting to objects in a constellation is not sufficient for avoiding an accident, because a vehicle may still encounter unsafe situations that are not necessarily dependent on other objects in the constellation. For example, a vehicle may be driving too fast for road conditions, which might lead to loss of control of the vehicle and/or might cause the vehicle to depart from its intended path. In particular, the operating condition of the vehicle (*e.g.,* speed, acceleration/deceleration, etc.) may be unsafe (or may become unsafe) depending on the road conditions (wet or icy road, low friction surface, sharp curve, steep decline) and/or vehicle conditions (worn tires with poor friction, high velocity, high acceleration/deceleration, sharp steering movements, etc.). Because these types of unsafe conditions are not caused by the constellation of nearby objects (e.g., the ego vehicle in relation to other objects), reaction-based approaches, like RSS, are insufficient to improve the safety of such situations.

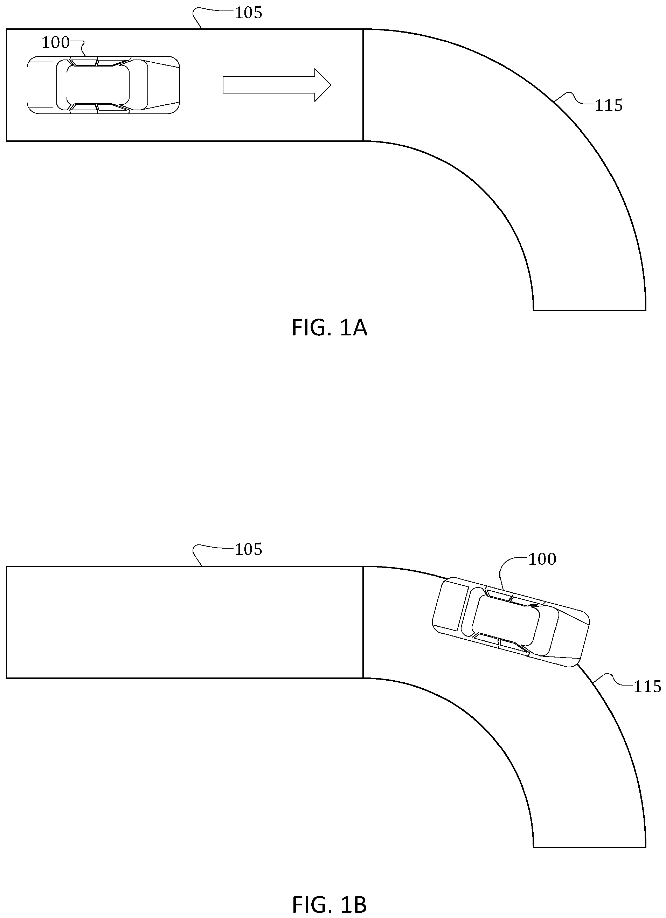

FIGs. 1A and 1B illustrate an example how an RSS-based safety system may be insufficient to ensure safe driving conditions. In FIG. 1A, a vehicle 100 is traveling on a roadway with road segments 105 and 115, where the road segments do not include other traffic or nearby objects. If the vehicle 100 approaches a tight corner (e.g., at road segment 115) with a speed that is too high for the curvature of road segment 115, an RSS system will not react to enforce a speed reduction because there are no objects in the constellation of the vehicle 100. As a result, as shown in FIG 1B, the vehicle 100 may not safely corner, and the vehicle 100 may lose control, exit its intended lane, and/or exit the roadway. Other non-object based factors may also impact the safe cornering of vehicle 100, including, for example the existence of ice/water on road segment 115 that impacts the tire friction of vehicle 100 in road segment 115, as compared to road segment 105.

The proactive vehicle safety system discussed below is designed to remediate these problems. As will be apparent from the description below, the proactive vehicle safety system determines a safe operating condition (e.g., a safe speed and/or a safe acceleration/deceleration for the next road segment) based on the current and near future road conditions. The system may also proactively restrict vehicle motion to safe operating conditions in a way that also respects any RSS-based safety requirements.

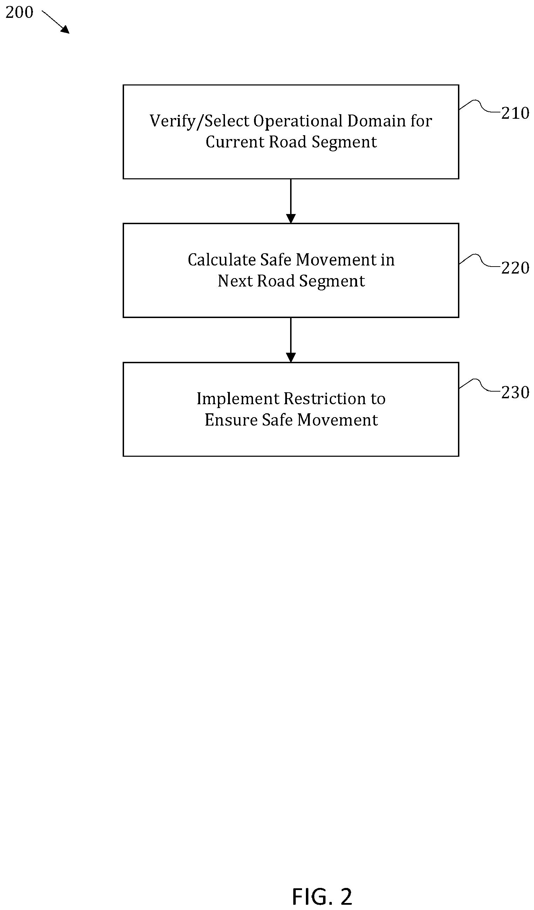

FIG. 2 is a schematic drawing illustrating an exemplary vehicle control system 200 for proactively controlling a vehicle. As discussed in more detail below, system 200 includes three primary modules: (1) an operational design domain verification and selection system, e.g., module 210, for verifying and selecting the operational domain used for calculating the safe movement the current road segment; (2) a safe motion calculator, e.g., module 220, for calculating safe motion ranges for safe movement of the vehicle (e.g., speed, acceleration, jerk, etc.) in the next road segment, (3) a motion restrictor, e.g., module 230, for implementing a driver warning and/or driving command to enforce the safe motion ranges for safe movement of the vehicle.

Vehicle control system 200 includes an operational design domain (ODD) verification and selection system, e.g., module 210 (e.g., a domain selector), for verifying and selecting the operational domain used for calculating the safe movement the current road segment. An ODD refers to the scope and limits of a driving profile for a particular domain, which may include parameters related to environmental, geographical, and time-of-day restrictions associated with the operation of a vehicle in a particular location. The ODD parameters are selected and verified with the understanding that a vehicle may operate in different environmental conditions (e.g., dry, wet, flat, and/or sloped road surfaces) associated with different locations, and the appropriate operational parameters for the "domain" are selected from a set of parameters that may be appropriate for that domain. Each domain in the ODD may have a different parametrization and different values associated with each of the operational parameters.

The ODD verification and selection system of module 210 may verify and select the domain (e.g., the ODD parameter(s) and associated value(s)) to be used for determining safety conditions (e.g., in a safety layer such as a safe motion calculator and/or an object-based safety layer (e.g., an RSS layer)) and/or for determining a driving policy (e.g., a target speeds, target acceleration, etc. in a driving policy layer) for the current location. Exemplary ODD parameters of the domain may include, for example, an acceleration limit, a speed limit, a motion or behavior assumption for other traffic participants, and/or a motion or behavior assumption for the vehicle in the next road segment. Module 210 may verify the domain for the current location (e.g., a current road segment) and for the next road segment (e.g., where the vehicle is expected to be in a few hundred meters) and/or may select a new domain based on information about the operational environment of the current or next road segment (e.g., friction values, decent/ascent gradients, etc.). For example, if an inappropriate domain for responsibility-sensitive safety is detected, the ODD verification and selection system of module 210 may select a new domain that better matches the requirements of the responsibility-sensitive safety system. As a result, the associated safety parameters (e.g., used in an RSS layer) may be updated for the domain (e.g., by reducing the applicable braking force).

The ODD verification and selection system of module 210 may receive inputs from various data sources, including the data from the vehicle, vehicle sensors, cameras and/or Light Detection and Ranging (LiDAR), communications systems (e.g., vehicle-to-everything (V2X) communications), a map database, etc, about the operating conditions of the vehicle. As examples, a vehicle information system may provide information about the current tire friction (e.g., from a sensor that provides friction data about the current road-to-tire interaction), vehicle speed (e.g., obtained from, e.g., the speedometer), the vehicle's pose (e.g., position, heading, pitch, roll obtained from, e.g., accelerometers, gyroscopes, GPS, etc.), and vehicle tire pressure to obtain the specific road friction, road gradients, and any other operational information for the vehicle for its current position or its expected future position.

As further examples, camera and LiDAR sensor data may be used to scan the road surface to detect wet/dry areas, a change in road surface type (e.g., tarmac conditions), change in slopes, change in curvature, etc. for the conditions of the next road segments as compared with the conditions of the current road segment. By one estimate, using vehicle data and sensors, it may be possible to predict road conditions over the next 50 to 200 meters of the expected trajectory of the vehicle, or further. Data from vehicles ahead may be obtained (e.g., using communications systems such as V2X communications), for example, in order to estimate how the road conditions may change at much greater distances ahead than from the on-board information/sensors that would otherwise available to the ego vehicle.

As further examples, map information may also be used to estimate and predict road conditions. Map information may be stored (e.g., in the vehicle or on a remote database that is accessible by the vehicle) in a way that includes operational information organized by road segments. For example, a road segment may include a friction coefficient for the road segment and/or a road geometry (e.g., curvature, gradient, etc) for the road segment. This map information may be used as an input for estimating the conditions of the next road segment, especially where the operational information for the road segment is expected to change significantly for the next road segment. While some map information may be universally applicable to all vehicles (e.g., road geometry like curvature and gradient), some map information may be vehicle specific (e.g., friction). Such vehicle-specific information may be stored by vehicle-type in the map database. Additionally, some map information may provide a baseline operation value that may be adjusted depending on other operational/environmental factors. For example, friction may depend on the type of vehicle, the type of tires (e.g., summer tires versus winter tires or high performance versus all-weather), the wear of the tires, the tire pressure of the tires, the center of gravity of the vehicle, the weight of the vehicle, the damping rates for the shock absorbers, the current weather, the current speed, etc., so a friction coefficient provided by the map information may serve as a baseline value for estimating the specific friction value for the vehicle in the next road segment(s).

Equations (1) and (2) below provide examples of how map information may be used as a baseline for estimating a friction experienced by the vehicle in the next road segment:

$$\Delta_{rel} friction = \frac{Current\ vehicle\ friction}{Current\ map\ friction} \qquad (1)$$

$$Next\ vehicle\ friction = \Delta_{rel} friction * Next\ map\ friction \qquad (2)$$

First, a relative change in friction ($\Delta_{rel} friction$) may be determined by dividing the current vehicle friction by the current map friction (e.g., obtained from information from the map database for the current road segment). Next, the vehicle friction for the next road segment may be estimated by multiplying the relative change in friction by the next map friction (obtained from information from the map database for the next road segment). In this regard, the current and next map friction coefficients are obtained from the map database using the current vehicle position (e.g., map information corresponding to the current road segment) and its expected trajectory (e.g., for an autonomous vehicle, this is the next road segment of the route that has been planned by the automatic driving system; for a vehicle without a planned route, the expected trajectory of the vehicle may be determined using the worst possible next road segment based on the vehicle's prior path and actual operating parameters).

Based on any or all of these types of inputs described in the prior six paragraphs, the ODD verification and selection system of module 210 may verify that the currently selected domain is appropriate for the next road segment. If the currently selected domain is not appropriate, a new domain may be selected to be used for the next road segment. Importantly, the domain should be updated proactively. In other words, the domain should be changed well in advance of the expected change in road conditions ahead in order to proactively and safely adapt the vehicle's behavior to safely comply with the safe operational conditions for the next road segment. In this sense, the "next road segment" may be a several hundred meters ahead of the current road segment, though it should be appreciated that the next road segment may be closer or further from current road segment, and it may depend on how accurately the vehicle's expected trajectory may be determined.

As will be described in more detail later, the information from module 210 is provided to the safe motion calculator, e.g., module 220, for calculating parameters for safe movement of the vehicle (e.g., speed, acceleration, etc.) in the next road segment. The information from module 210 may also be provided to a driving policy layer (if available) and an object-based safety layer (e.g., an RSS-based safety layer, if available) so that those layers may adapt their respective parameters accordingly (e.g., a maximum braking force may be provided so that the object-based safety layer does not exceed the maximum braking force when reacting to a detected object in the vehicle's route). In addition, the information from module 210 may be provided to the map database so that the map database may be updated with current data (e.g., newly determined friction for a given road segment). Similarly, the information from module 210 may be shared with other vehicles via the communication system (e.g., reporting via a V2X communication system), so that other vehicles may use the reported information in their own safety systems.

Vehicle control system 200 includes a safe motion calculator, e.g., module 220, for calculating safe motion ranges for safe movement of the vehicle (e.g., a safe speed range, a safe acceleration range, a safe jerk range, etc.) in the next road segment, based on information received from module 210. Module 220 may also use future road geometry (e.g., information obtained from the map database about, e.g., road geometry (e.g., curvature, slope, gradients, etc.), safe motion, and/or other information associated with a road segment, of the next road segment(s)). For example, a safe speed range and a safe acceleration range may be calculated from the road curvature of the next road segment and a maximum lateral acceleration in the next road segment, as shown below in equation (3), where $a_{lat}$ is the maximum

lateral acceleration, $v$ is the vehicle speed, and $R$ is the curvature of the road segment:

$$a_{lat} = \frac{v^2}{R} \tag{3}$$

First, a maximum lateral acceleration (e.g., acceleration/deceleration that is lateral to the direction of the expected/desired trajectory of the vehicle) may be determined for the current road segment. Maximum lateral acceleration depends on, among other factors, the tires, the type of vehicle, the road friction, and the road geometry. As this is a vehicle specific parameter, the maximum lateral acceleration may be determined specifically for a given vehicle. In order to simplify this determination, a vehicle database may be used that contains a maximum lateral acceleration that corresponds to the vehicle type, tire type, road geometry, etc., which may be obtained by looking up the vehicle's information in the vehicle database. In addition, the information in the vehicle database may be further arranged by driving profile (e.g., comfort mode, sport mode, etc.), so that the maximum lateral acceleration corresponding to the vehicle type, tire type, and/or road geometry may be different depending on the selected driving profile (e.g., a comfort profile may provide for a lower maximum lateral acceleration while a sport mode may provide for a higher maximum later acceleration), which may be dynamically adjusted while the vehicle is in operation, thereby permitting the vehicle to also dynamically adjust the maximum lateral acceleration setting.

Next, once the maximum lateral acceleration for the vehicle has been determined, the safe speed range may be determined from the maximum lateral acceleration and the curvature of the road segment and/or any other road geometry of or information about the road segment.

The safe speed range may be further adjusted depending on the maximum longitudinal acceleration (e.g., acceleration/deceleration that is along the direction of the expected/desired trajectory of the vehicle) of the vehicle. As with maximum lateral acceleration, this is also vehicle specific, so the maximum lateral acceleration may be determined specifically for a given vehicle. In order to simplify this determination, the vehicle database described above may also contain a maximum longitudinal acceleration that corresponds to the vehicle type, tire type, and/or road geometry, etc., which may be obtained by looking up the vehicle's information in the vehicle database. In addition, the information in the vehicle database may be further arranged by driving profile (e.g., comfort mode, sport mode, etc.), so that the maximum longitudinal acceleration corresponding to the vehicle type, tire type, and/or road geometry may be different depending on the selected driving profile (e.g., a comfort profile may provide for a lower maximum longitudinal acceleration while a sport mode may provide for a higher maximum longitudinal acceleration), which may be adjusted dynamically while the vehicle is in operation, thereby permitting the vehicle to adjust the maximum longitudinal acceleration setting dynamically. The safe acceleration range may be based on the maximum longitudinal acceleration.

In addition to safe speed range and safe acceleration range, it should be appreciated that any other parameter ranges for a safe motion of the vehicle (e.g., a safe motion range) may be calculated using the principles described above with respect to module 220. For example, a safe jerk range (where jerk is the derivative of acceleration) may be calculated for the next road segment. One of skill in the art will appreciate that any number of safe motion ranges may be provided.

As will be described in more detail later, the information from module 220 is provided to the motion restrictor, e.g., module 230, for implementing a driver warning and/or driving command to enforce the safe motion ranges for the safe movement of the vehicle. The information from module 220 may also be provided to the object-based safety layer (e.g., an RSS-based safety layer, if available) so that it may adapt its respective parameters accordingly (e.g., a maximum braking force may be provided so that the object-based safety layer does not exceed the maximum braking force when reacting to a detected object in the vehicle's route).

Vehicle control system 200 also includes a motion restrictor, e.g., module 230, for implementing a driver warning and/or driving command to enforce the safe motion ranges for safe movement of the vehicle obtained from module 220. Based on the safe motion ranges, the target movement values (e.g., target speed, target acceleration, etc.), values that may be set by a driving policy layer (e.g., for an automatic vehicle) or by a human driver, and/or, if available, motion restrictions (e.g., limits to/changes in motion provided by an RSS-like object-based safety layer), a safety restriction is implemented. The safety restriction may be a warning message provided in and/or on the vehicle to alert a user of the vehicle that current target movement value (e.g., the target speed, the target acceleration) is outside the safe motion range (e.g., the safe speed range or the safe acceleration range). The warning message may be provided in the form of a dashboard indicator light, a chime, and/or a spoken message. The safety restriction may also be implemented in the form of a vehicle adjustment instruction that is provided to a vehicle system to adjust the driving system to enforce the safe motion ranges. For example, the vehicle adjustment instruction may be a braking instruction sent to the braking system to slow the vehicle down to be within the safe speed range using an acceleration (e.g., deceleration) that is within the safe acceleration range (e.g., a safe deceleration range). It should be appreciated that other instructions may be sent to other vehicle systems, including for example, the steering system, the gearing system, the engine system, etc.

to safely enforce the safe motion range.

In order to provide enough time to adjust the vehicle's driving system to reach the safe motion range safely, as explained earlier, it may be important to process the information about a next road segment that is relatively far in front of the vehicle's expected trajectory or planned route to provide for a proactive adjustment that may comply with all safety requirements. For example, if the upcoming curved road requires a relatively slow velocity to satisfy the safe speed range and at the same time, the friction of the road surface may be such that a relatively slow deceleration may be needed to satisfy the safe acceleration range, the vehicle may need sufficient distance (e.g., fifty to one-hundred meters ahead, or more) to decelerate (within the safe acceleration range) to the safe speed range in a reasonable and safe manner.

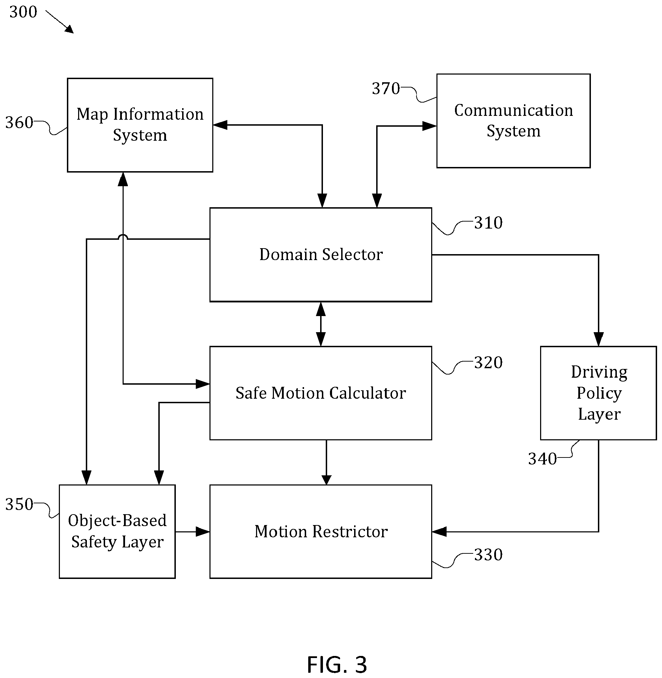

FIG. 3 is a schematic drawing illustrating an exemplary device 300 for proactively controlling a vehicle. The device may include any of the features described above with respect to vehicle control system 200. FIG. 3 is referred to in order to show more clearly the exchange of information among the various systems that may be part of exemplary device 300.

Device 300 may include three primary modules: (1) an operational design domain verification and selection system for verifying and selecting the operational domain used for calculating the safe movement the current road segment (e.g., a domain selector 310); (2) a safe motion calculator 320 for calculating safe motion ranges for safe movement of the vehicle (e.g., speed, acceleration, etc.) in the next road segment, (3) a motion restrictor 330 for implementing a driver warning and/or driving command to enforce the safe motion ranges for safe movement of the vehicle. Device may include a processor (or multiple processors) for controlling each of the subsystems 310, 320, and 330, as well as the subsystems 340, 350, 360, and 370.

Device 300 may include a domain selector 310 for verifying and selecting the operational design domain (ODD) used for calculating the safe movement in the current road segment. The ODD verification and selection system (e.g., domain selector 310) may operate, for example, with any of the functionality described above with respect to module 210 as discussed above with respect to Fig. 2. As shown in FIG. 3, the domain selector 310 may receive inputs from the safe motion calculator 320 in order to assist in the verification and selection of the current domain and to decide whether a different domain may be appropriate for the road conditions of the next road segment(s). If the currently selected domain is not appropriate, a new domain may be selected, based in part on the inputs from the safe motion calculator 320, to be used for the next road segment.

The domain selector 310 may receive frequent updates (e.g., at a regular time interval (e.g., every microsecond, every second, every minute, etc.) or at a triggered time interval (e.g., when a changed condition is detected)) from the safe motion calculator in order to verify and select the domain on a proactive basis. This may allow the domain to be updated well in advance of changed road conditions that may be encountered in the next road segment(s), thus allowing the vehicle to safely adapt to the changed operational conditions for the next road segment(s). As explained earlier, the "next road segment" may be a several hundred meters ahead of the current road segment, though it should be appreciated that the next road segment may be closer or further from current road segment, and it may depend on how accurately the vehicle's expected trajectory may be determined.

The information related to the operational domain of the vehicle used in the domain selector 310 may be provided to the safe motion calculator 320, in the manner discussed above with respect to modules 210 and 220 of Fig. 2. In addition, the information related to the operational domain of the vehicle used in the domain selector 310 may also be provided to a driving policy layer 340. The driving policy layer 340 may use the information from the domain selector 310 so that it may adapt the driving policy accordingly (e.g., select a target speed, target acceleration, route, etc. based on the selected domain and its related information).

In addition, the information related to the operational domain of the vehicle used in the domain selector 310 may also be provided to an object-based safety layer 340. The object-based safety layer 340 (e.g., an RSS-based safety layer) may use the information from the domain selector 310 to adapt the parameters of the safety layer accordingly (e.g., the safety layer may adapt its decision-making based on the selected domain) (e.g., so that the safety layer does not cause the maximum braking force to be exceeded when reacting to a detected object in the vehicle's route).

In addition, the information related to the operational domain of the vehicle used in the domain selector 310 may also be provided to a map information system 360 (e.g., a map database) so that the map information system may be updated with information obtained about the current domain (e.g., a newly determined friction for a given road segment). As explained earlier with respect to module 210 of Fig. 2, the exchange of information with the map information system 360 may be bidirectional (hence, the double-arrow shown in Fig. 3). In other words, the domain selector 310 may also receive data from the map information system 360 in order to select and verify the operational domain of the vehicle. After verifying and selecting the operational domain of the vehicle, the domain selector 310 may provide updated information to the map information system 360.

In addition, the information related to the operational domain of the vehicle used in the domain selector 310 may be shared with other vehicles via a communication system 370 (e.g., communications via a V2X communication system), so that other vehicles may use the information collected about the current domain in their own safety systems or other systems. As explained earlier with respect to module 210 of Fig. 2, the exchange of information with the communication system 370 may also be bidirectional (hence, the double-arrow shown in Fig. 3). In other words, the domain selector 310 may also receive data from the communication system 370 in order to select and verify the operational domain of the vehicle. After verifying and selecting the operational domain of the vehicle, the domain selector 310 may provide updated information to the communication system 370, so that the updated information may be shared with other vehicles.

Device 300 may include a safe motion calculator 320 for calculating safe motion ranges for safe movement of the vehicle (e.g., a safe speed range, a safe acceleration range, a safe jerk range, etc.) in the next road segment, based on information received from the domain selector 310. The safe motion calculator 320 may operate, for example, with any of the functionality described above with respect to module 220 as discussed above with respect to Fig. 2.

The information from the safe motion calculator 320 may be provided to the motion restrictor 330, in the manner discussed above with respect to modules 220 and 230 of Fig. 2. In addition, the information from the safe motion calculator 320 may also be fed back into the domain selector 310 so that the values calculated for the safe movement of the vehicle in the next segment may be used to select and/or verify an appropriate domain for the next road segment. In this sense, the information shared between the domain selector 310 and the safe motion calculator 320 may be bidirectional, as depicted by the double-headed arrow in Fig. 3.

In addition, the information from the safe motion calculator 320 may be provided to the object-based safety layer 350 (e.g., an RSS-based safety layer, if available) so that the object-based safety layer 350 may use the information to adapt its respective parameters accordingly (e.g., the obj ect-based safety layer may adapt its decision-making based on the safe operating parameters) (e.g., so that the object-based safety layer does not cause the safe acceleration to be exceeded when reacting (e.g., braking) to a detected object in the vehicle's route).

In addition, the information from the safe motion calculator 320 may also be provided to the map information system 360 (e.g., a map database) so that the map information system may be updated with the calculated safety information (e.g., a newly determined safe acceleration range for a given road segment). As explained earlier with respect to module 220 of Fig. 2, the exchange of information with the map information system 360 may be bidirectional (hence, the double-arrow shown in Fig. 3). In other words, the safe motion calculator 320 may also receive data from the map information system 360 in order to calculate safe motion parameters for the vehicle. Then, after calculating safe motion parameters, the safe motion calculator 320 may provide updated information to the map information system 360.

Device 300 may include a motion restrictor 330 for implementing a driver warning and/or driving command to enforce the safe motion ranges for safe movement of the vehicle obtained from module 320. The motion restrictor 330 may operate, for example, with any of the functionality described above with respect to module 230 as discussed above with respect to Fig. 2. Ultimately, the motion restrictor 330 implements a safety restriction, based on the safe motion calculator and target motion. The safety restriction may be a warning message provided in and/or on the vehicle to alert a user of the vehicle that current target movement value (e.g., the target speed, the target acceleration) is outside the safe motion range (e.g., the safe speed range or the safe acceleration range).

In addition, the motion restrictor 330 may use data from the object-based safety layer 350 to further restrict the motion of the vehicle. In combination with the safe motion ranges, the information from the object-based safety layer 350 may be used to adjust how the motion restrictor 330 responds to safely achieve the objective of the object-based safety layer 350 while at the same time safely adhering to the requirements of the safe motion parameters received from the safe motion calculator 320. For example, if an object is detected in the vehicle's trajectory, the information provided to the motion restrictor 330 from the object-based safety layer 350 may indicate that a vehicle movement and deceleration is required to safely avoid the detected object. The motion restrictor 330 would then use this information in combination with the safe motion parameters from the safe motion calculator 320 to achieve the deceleration and vehicle movement in a way that may comply with the safe motion parameters. For example, in order to decelerate as requested by the object-based safety layer 350 in a manner that that complies with the safe acceleration range from the safe motion calculator 320, the motion restrictor 330 may begin the deceleration sooner than otherwise required in order to decelerate at a slower rate of deceleration that complies with the safe acceleration range specified by the safe motion calculator 320.

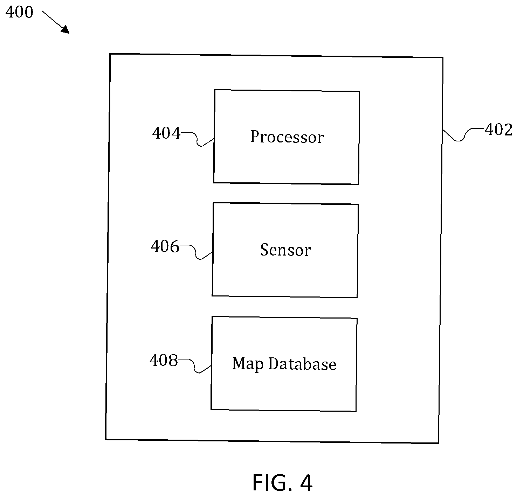

FIG. 4 is a schematic drawing illustrating an apparatus 400 for proactively controlling a vehicle. The device 400 may include any of the features described above with respect to vehicle control system 200 and/or device 300. FIG. 4 may be implemented as an apparatus, a method, and/or a computer readable medium that, when executed, performs the features described with respect to vehicle control system 200 and/or device 300. 1. It should be understood that apparatus 400 is only an example, and other configurations may be possible that include, for example, different components or additional components.

Apparatus 400 includes a vehicle control system 402. The vehicle control system 402 includes a processor 404. In addition or in combination with any of the features described in the following paragraphs, the processor 404 of vehicle control system 402 is configured to determine a first road condition experienced by a vehicle operating on a current road segment. The processor 404 is further configured to determine a second road condition for a next road segment, wherein the next road segment is based on an expected trajectory of the vehicle. The processor 404 is further configured to determine, based on the first road condition and the second road condition, a safe motion range of the vehicle in the next road segment. The processor 404 is further configured to implement a safety restriction if an expected motion of the vehicle in the next road segment is outside the safe motion range, wherein the safety restriction depends on an object-based safety layer parameter.

Furthermore, in addition to or in combination with any one of the features of this and/or the preceding paragraph with respect to processor 404 of vehicle control system 402, the first road condition may include a road friction experienced by the vehicle on the current road segment. Furthermore, in addition to or in combination with any one of the features of this and/or the preceding paragraph, the safe motion range of the vehicle control system 402 may include at least one of a safe velocity range, a safe acceleration range, and/or a safe jerk range of the vehicle in the next road segment. Furthermore, in addition to or in combination with any one of the features of this and/or the preceding paragraph, the processor 404 of vehicle control system 402 may further determine a domain of operational parameters for the vehicle in the next road segment, wherein the domain of operating parameters may depend on at least one of the first road condition, the second road condition, and/or a current domain of operating parameters for the vehicle. Furthermore, in addition to or in combination with any one of the features of this and/or the preceding paragraph, the safe motion range of the vehicle control system 402 may include a maximum lateral acceleration that is lateral to the expected trajectory of the vehicle and a maximum longitudinal acceleration that is along the expected trajectory of the vehicle, wherein the safe motion range is determined from the maximum lateral acceleration and a geometry of the next road segment. Furthermore, in addition to or in combination with any one of the features of this and/or the preceding paragraph, the safe motion range of the vehicle control system 402 may depend on a vehicle type of the vehicle, a type of tires on the vehicle, and the expected speed of the vehicle.

Furthermore, in addition to or in combination with any one of the features of this and/or the preceding two paragraphs, the first road condition of the vehicle control system 402 may include a road friction determined based on at least one of a tire friction, a velocity, a pose, and/or a tire pressure of the vehicle. Furthermore, in addition to or in combination with any one of the features of this and/or the preceding two paragraphs, the second road condition of the vehicle control system 402 may be determined based on at least one of a road surface type, a road moisture level, a road geometry of the next road segment. Furthermore, in addition to or in combination with any one of the features of this and/or the preceding two paragraphs, the second road condition of the vehicle control system 402 may be determined based on road condition information obtained from other vehicles about the next road segment. Furthermore, in addition to or in combination with any one of the features of this and/or the preceding two paragraphs, the first road condition of the vehicle control system 402 may be determined based on data from a sensor 406 on the vehicle, wherein the sensor 406 may include at least one of a tire friction sensor, a tire pressure sensor, a camera, a LiDAR, a vehicle position sensor, a vehicle speed sensor, an accelerometer, and/or a gyroscope. Furthermore, in addition to or in combination with any one of the features of this and/or the preceding two paragraphs, the safety restriction of the vehicle control system 402 may include a warning message provided in and/or on the vehicle, wherein the warning message comprises a dashboard indicator light, a chime, and/or a spoken message. Furthermore, in addition to or in combination with any one of the features of this and/or the preceding two paragraphs, wherein the safety restriction of the vehicle control system 402 may include a vehicle adjustment instruction, wherein the vehicle may be configured to adjust a driving system based on the vehicle adjustment instruction. Furthermore, in addition to or in combination with any one of the features of this and/or the preceding two paragraphs, the driving system of the vehicle control system 402 may include at least one of a braking system, a steering system, and/or an acceleration system of the vehicle, and wherein the vehicle adjustment instruction comprises at least one of a braking instruction, a turning instruction, an acceleration instruction and/or a deceleration instruction.

Furthermore, in addition to or in combination with any one of the features of this and/or the preceding three paragraphs, the second road condition for the next road segment of the vehicle control system 402 may be based on map information, wherein the map information may include at least one of a friction coefficient, a safe velocity, a safe acceleration, and/or a road geometry of the next road segment. Furthermore, in addition to or in combination with any one of the features of this and/or the preceding three paragraphs, the vehicle control system may further include a map database 408 configured to store the map information by road segments, wherein the map database may be further configured to update the map information in the map database that is associated with the next road segment based on the safe motion range. Furthermore, in addition to or in combination with any one of the features of this and/or the preceding three paragraphs, the object-based safety parameter of the vehicle control system 402 may include, in relation to an object proximate the vehicle, at least one of a longitudinal distance to the object, a lateral distance to the object, a visibility level at the object, and/or an avoidance scheme in relation to the object. Furthermore, in addition to or in combination with any one of the features of this and/or the preceding three paragraphs, the processor 404 of vehicle control system 402 may be configured to adjust the object-based safety parameter based on the safe motion range. Furthermore, in addition to or in combination with any one of the features of this and/or the preceding three paragraphs, the vehicle control system 402 may be further configured to store responsibility-sensitive safety parameters and adjust the responsibility-sensitive safety parameters based on the safe operating parameter.

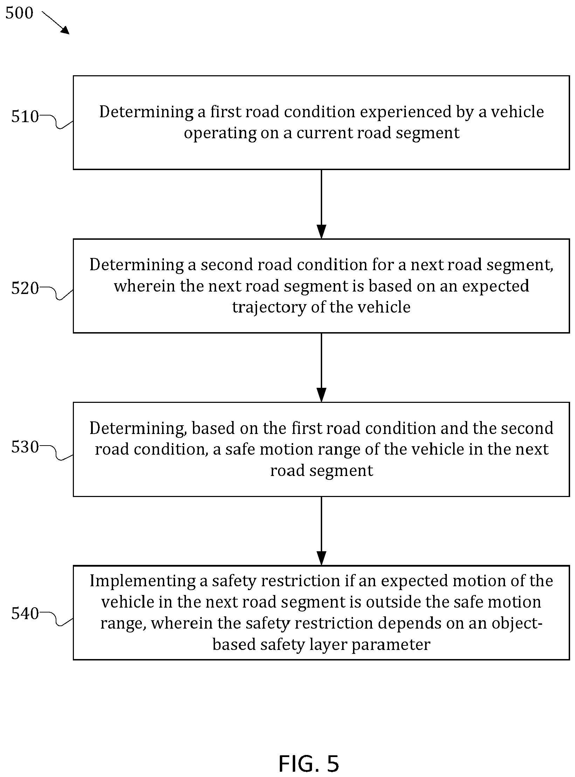

FIG. 5 depicts a schematic flow diagram of a method 500 for proactively controlling a vehicle. Method 500 may implement any of the features described above with respect to vehicle control system 200 and/or device 300.

Method 500 for proactively controlling a vehicle includes, in 510, determining a first road condition experienced by a vehicle operating on a current road segment. Method 500 also includes, in 520, determining a second road condition for a next road segment, wherein the next road segment is based on an expected trajectory of the vehicle. Method 500 also includes, in 530, determining, based on the first road condition and the second road condition, a safe motion range of the vehicle in the next road segment. Method 500 also includes, in 540, implementing a safety restriction if an expected motion of the vehicle in the next road segment is outside the safe motion range, wherein the safety restriction depends on an object-based safety layer parameter.

Example 1 is a vehicle control system that includes a processor. The processor is configured to determine a first road condition experienced by a vehicle operating on a current road segment. The processor is also configured to determine a second road condition for a next road segment, wherein the next road segment is based on an expected trajectory of the vehicle. The processor is also configured to determine, based on the first road condition and the second road condition, a safe motion range of the vehicle in the next road segment. The processor is also configured to implement a safety restriction if an expected motion of the vehicle in the next road segment is outside the safe motion range, wherein the safety restriction depends on an object-based safety layer parameter.

Example 2 is the vehicle control system of Example 1, wherein the first road condition includes a road friction experienced by the vehicle on the current road segment.

Example 3 is the vehicle control system of either of Examples 1 or 2, wherein the safe motion range includes at least one of a safe velocity range, a safe acceleration range, and/or a safe jerk range of the vehicle in the next road segment.

Example 4 is the vehicle control system of any one of Examples 1 to 3, wherein the processor is further configured to determine a domain of operational parameters for the vehicle in the next road segment, wherein the domain of operational parameters includes at least one of an acceleration limit, a speed limit, a motion or behavior assumption for other traffic participants, and/or a motion or behavior assumption for the vehicle in the next road segment, and wherein the domain of operating parameters depends on at least one of the first road condition, the second road condition, and/or a current domain of operating parameters for the vehicle.

Example 5 is the vehicle control system of any one of Examples 1 to 4, wherein the safe motion range includes a maximum lateral acceleration that is lateral to the expected trajectory of the vehicle and a maximum longitudinal acceleration that is along the expected trajectory of the vehicle, wherein the safe motion range is determined from the maximum lateral acceleration and a geometry of the next road segment.

Example 6 is the vehicle control system of any one of Examples 1 to 5, wherein the safe motion range further depends on a vehicle type of the vehicle, a type of tires on the vehicle, and the expected speed of the vehicle.

Example 7 is the vehicle control system of any one of Examples 1 to 6, wherein the first road condition includes a road friction determined based on at least one of a tire friction, a velocity, a pose, and/or a tire pressure of the vehicle.

Example 8 is the vehicle control system of any one of Examples 1 to 7, wherein the second road condition is determined based on at least one of a road surface type, a road moisture level, a road geometry of the next road segment.

Example 9 is the vehicle control system of any one of Examples 1 to 8, wherein the second road condition is determined based on road condition information obtained from other vehicles about the next road segment.

Example 10 is the vehicle control system of any one of Examples 1 to 9, the first road condition is determined based on data from a sensor on the vehicle, wherein the sensor includes at least one of a tire friction sensor, a tire pressure sensor, a camera, a LiDAR, a vehicle position sensor, a vehicle speed sensor, an accelerometer, and/or a gyroscope.

Example 11 is the vehicle control system of any one of Examples 1 to 10, wherein the safety restriction includes a warning message provided in and/or on the vehicle, wherein the warning message includes a dashboard indicator light, a chime, and/or a spoken message.

Example 12 is the vehicle control system of any one of Examples 1 to 11, wherein the safety restriction includes a vehicle adjustment instruction, wherein the vehicle is configured to adjust a driving system based on the vehicle adjustment instruction.

Example 13 is the vehicle control system of Example 12, wherein the driving system includes at least one of a braking system, a steering system, and/or an acceleration system of the vehicle, and wherein the vehicle adjustment instruction includes at least one of a braking instruction, a turning instruction, an acceleration instruction and/or a deceleration instruction.

Example 14 is the vehicle control system of any one of Examples 1 to 13, wherein the second road condition for the next road segment is further based on map information, wherein the map information includes at least one of a friction coefficient, a safe velocity, a safe acceleration, and/or a road geometry of the next road segment.

Example 15 is the vehicle control system of Example 14, further including a map database configured to store the map information by road segments, wherein the map database is further configured to update the map information in the map database that is associated with the next road segment based on the safe motion range.

Example 16 is the vehicle control system of any one of Examples 1 to 15, wherein the object-based safety parameter includes, in relation to an object proximate the vehicle, at least one of a longitudinal distance to the object, a lateral distance to the object, a visibility level at the object, and/or an avoidance scheme in relation to the object.

Example 17 is the vehicle control system of any one of Examples 1 to 16, wherein the processor is further configured to adjust the object-based safety parameter based on the safe motion range.

Example 18 is the vehicle control system of any one of Examples 1 to 17, further including a responsibility-sensitive safety module configured to store responsibility-sensitive safety parameters, the responsibility-sensitive safety module further configured to adjust the responsibility-sensitive safety parameters based on the safe operating parameter.

Example 19 is a safety controller device for a vehicle. The safety controller device includes a domain selector configured to determine a current road condition experienced by the vehicle operating on a current road segment. The domain selector is further configured to determine an estimated road condition for a next road segment, wherein the next road segment is based on an expected trajectory of the vehicle. The safety controller devices further includes a safe motion calculator configured to determine, based on the current road condition and the estimated road condition, a safe velocity range for the vehicle in the next road segment and a safe acceleration range for the vehicle in the next road segment. The safety controller device further includes a motion restrictor configured to implement a safety restriction if an expected speed of the vehicle in the next road segment is outside the safe velocity range or if an expected acceleration of the vehicle in the next road segment is outside the safe acceleration range.

Example 20 is the safety controller device of Example 19, wherein the safety restriction further depends on a responsibility-sensitive safety (RSS) parameter, wherein the RSS parameter includes, in relation to an object proximate the vehicle, at least one of a longitudinal distance to the object, a lateral distance to the object, a visibility level at the object, and/or an avoidance scheme in relation to the object.

Example 21 is the safety controller device of Examples 19 or 20, wherein the current road condition includes a road friction experienced by the vehicle on the current road segment.

Example 22 is the safety controller device of any one of Examples 19 to 21, wherein the domain selector is configured to select a domain of operational parameters for the vehicle in the next road segment, wherein the domain of operational parameters includes at least one of an acceleration limit, a speed limit, a motion or behavior assumption for other traffic participants, and/or a motion or behavior assumption for the vehicle in the next road segment, and wherein the domain of operating parameters depends on at least one of the current road condition, the estimated road condition, and/or a current domain of operating parameters for the vehicle.

Example 23 is the safety controller device of any one of Examples 19 to 22, wherein the safe velocity range and/or safe acceleration range includes a maximum lateral acceleration that is lateral to the expected trajectory of the vehicle and a maximum longitudinal acceleration that is along the expected trajectory of the vehicle, wherein the safe motion range is determined from the maximum lateral acceleration and a geometry of the next road segment.

Example 24 is the safety controller device of any one of Examples 19 to 23, wherein the safe velocity range and/or safe acceleration range further depends on a vehicle type of the vehicle, a type of tires on the vehicle, and the expected speed of the vehicle.

Example 25 is the safety controller device of any one of Examples 19 to 24, wherein the current road condition includes a road friction determined based on at least one of a tire friction, a velocity, a pose, and/or a tire pressure of the vehicle.

Example 26 is the safety controller device of any one of Examples 19 to 25, wherein the estimated road condition is determined based on at least one of a road surface type, a road moisture level, a road geometry of the next road segment.

Example 27 is the safety controller device of any one of Examples 19 to 26, wherein the estimated road condition is determined based on road condition information obtained from other vehicles about the next road segment.

Example 28 is the safety controller device of any one of Examples 19 to 27, the current road condition is determined based on data from a sensor on the vehicle, wherein the sensor includes at least one of a tire friction sensor, a tire pressure sensor, a camera, a LiDAR, a vehicle position sensor, a vehicle speed sensor, an accelerometer, and/or a gyroscope.

Example 29 is the safety controller device of any one of Examples 19 to 28, wherein the safety restriction includes a warning message provided in and/or on the vehicle, wherein the warning message includes a dashboard indicator light, a chime, and/or a spoken message.

Example 30 is the safety controller device of any one of Examples 19 to 29, wherein the safety restriction includes a vehicle adjustment instruction, wherein the vehicle is configured to adjust a driving system based on the vehicle adjustment instruction.

Example 31 is the safety controller device of Example 30, wherein the driving system includes at least one of a braking system, a steering system, and/or an acceleration system of the vehicle, and wherein the vehicle adjustment instruction includes at least one of a braking instruction, a turning instruction, an acceleration instruction and/or a deceleration instruction.

Example 32 is the safety controller device of any one of Examples 19 to 31, wherein the estimated road condition for the next road segment is further based on map information, wherein the map information includes at least one of a friction coefficient, a safe velocity, a safe acceleration, and/or a road geometry of the next road segment.

Example 33 is the safety controller device of any one of Examples 19 to 32, further including a map database configured to store the map information by road segments, wherein the map database is further configured to update the map information in the map database that is associated with the next road segment based on the safe velocity range and/or safe acceleration range.

Example 34 is the safety controller device of any one of Examples 19 to 33, wherein the domain selector and/or safe motion calculator are configured to adjust the object-based safety parameter based on the safe velocity range and/or safe acceleration range.

Example 35 is the safety controller device of any one of Examples 20 to 34, further including an responsibility-sensitive safety module configured to store the RSS parameter, the responsibility-sensitive safety module further configured to adjust the RSS parameter based on the safe velocity range and/or safe acceleration range.

Example 36 is a method for controlling a vehicle. The method includes determining a first road condition experienced by a vehicle operating on a current road segment. The method also includes determining a second road condition for a next road segment, wherein the next road segment is based on an expected trajectory of the vehicle. The method also includes determining, based on the first road condition and the second road condition, a safe motion range of the vehicle in the next road segment. The method also includes implementing a safety restriction if an expected motion of the vehicle in the next road segment is outside the safe motion range, wherein the safety restriction depends on an object-based safety layer parameter.

Example 37 is the method for controlling a vehicle of Example 36, wherein the first road condition includes a road friction experienced by the vehicle on the current road segment.

Example 38 is the method for controlling a vehicle of either of Examples 36 or 37, wherein the safe motion range includes at least one of a safe velocity range, a safe acceleration range, and/or a safe jerk range of the vehicle in the next road segment.

Example 39 is the method for controlling a vehicle of any one of Examples 36 to 38, wherein the method also includes determining a domain of operational parameters for the vehicle in the next road segment, wherein the domain of operational parameters includes at least one of an acceleration limit, a speed limit, a motion or behavior assumption for other traffic participants, and/or a motion or behavior assumption for the vehicle in the next road segment, and wherein the domain of operating parameters depends on at least one of the first road condition, the second road condition, and/or a current domain of operating parameters for the vehicle.

Example 40 is the method for controlling a vehicle of any one of Examples 36 to 39, wherein the safe motion range includes a maximum lateral acceleration that is lateral to the expected trajectory of the vehicle and a maximum longitudinal acceleration that is along the expected trajectory of the vehicle, wherein the safe motion range is determined from the maximum lateral acceleration and a geometry of the next road segment.

Example 41 is the method for controlling a vehicle of any one of Examples 36 to 40, wherein the safe motion range further depends on a vehicle type of the vehicle, a type of tires on the vehicle, and the expected speed of the vehicle.

Example 42 is the method for controlling a vehicle of any one of Examples 36 to 41, wherein the first road condition includes a road friction determined based on at least one of a tire friction, a velocity, a pose, and/or a tire pressure of the vehicle.

Example 43 is the method for controlling a vehicle of any one of Examples 36 to 42, wherein the second road condition is determined based on at least one of a road surface type, a road moisture level, a road geometry of the next road segment.

Example 44 is the method for controlling a vehicle of any one of Examples 36 to 43, wherein the second road condition is determined based on road condition information obtained from other vehicles about the next road segment.

Example 45 is the method for controlling a vehicle of any one of Examples 36 to 44, the first road condition is determined based on data from a sensor on the vehicle, wherein the sensor includes at least one of a tire friction sensor, a tire pressure sensor, a camera, a LiDAR, a vehicle position sensor, a vehicle speed sensor, an accelerometer, and/or a gyroscope.

Example 46 is the method for controlling a vehicle of any one of Examples 36 to 45, wherein the safety restriction includes a warning message provided in and/or on the vehicle, wherein the warning message includes a dashboard indicator light, a chime, and/or a spoken message.

Example 47 is the method for controlling a vehicle of any one of Examples 36 to 46, wherein the safety restriction includes a vehicle adjustment instruction, wherein the vehicle is configured to adjust a driving system based on the vehicle adjustment instruction.

Example 48 is the method for controlling a vehicle of Example 47, wherein the driving system includes at least one of a braking system, a steering system, and/or an acceleration system of the vehicle, and wherein the vehicle adjustment instruction includes at least one of a braking instruction, a turning instruction, an acceleration instruction and/or a deceleration instruction.

Example 49 is the method for controlling a vehicle of any one of Examples 36 to 48, wherein the second road condition for the next road segment is further based on map information, wherein the map information includes at least one of a friction coefficient, a safe velocity, a safe acceleration, and/or a road geometry of the next road segment.

Example 50 is the method for controlling a vehicle of Example 49, wherein the method also includes storing the map information by road segments and updating the map information in the map database that is associated with the next road segment based on the safe motion range.

Example 51 is the method for controlling a vehicle of any one of Examples 36 to 50, wherein the object-based safety parameter includes, in relation to an object proximate the vehicle, at least one of a longitudinal distance to the object, a lateral distance to the object, a visibility level at the object, and/or an avoidance scheme in relation to the object.

Example 52 is the method for controlling a vehicle of any one of Examples 36 to 51, wherein the method also includes adjusting the object-based safety parameter based on the safe motion range.

Example 53 is the method for controlling a vehicle of any one of Examples 36 to 52, wherein the method also includes storing responsibility-sensitive safety parameters and adjusting the responsibility-sensitive safety parameters based on the safe operating parameter.

Example 54 is one or more non-transient computer readable media, configured to cause one or more processors, when executed, to perform a method for controlling a vehicle. The method stored in the non-transient computer readable media includes determining a first road condition experienced by a vehicle operating on a current road segment. The method also includes determining a second road condition for a next road segment, wherein the next road segment is based on an expected trajectory of the vehicle. The method also includes determining, based on the first road condition and the second road condition, a safe motion range of the vehicle in the next road segment. The method also includes implementing a safety restriction if an expected motion of the vehicle in the next road segment is outside the safe motion range, wherein the safety restriction depends on an object-based safety layer parameter.

Example 55 is the non-transient computer readable media of Example 54, wherein the first road condition includes a road friction experienced by the vehicle on the current road segment.

Example 56 is the non-transient computer readable media of either of Examples 54 or 55, wherein the safe motion range includes at least one of a safe velocity range, a safe acceleration range, and/or a safe jerk range of the vehicle in the next road segment.

Example 57 is the non-transient computer readable media of any one of Examples 54 to 56, wherein the method also includes determining a domain of operational parameters for the vehicle in the next road segment, wherein the domain of operational parameters includes at least one of an acceleration limit, a speed limit, a motion or behavior assumption for other traffic participants, and/or a motion or behavior assumption for the vehicle in the next road segment, and wherein the domain of operating parameters depends on at least one of the first road condition, the second road condition, and/or a current domain of operating parameters for the vehicle.

Example 58 is the non-transient computer readable media of any one of Examples 54 to 57, wherein the safe motion range includes a maximum lateral acceleration that is lateral to the expected trajectory of the vehicle and a maximum longitudinal acceleration that is along the expected trajectory of the vehicle, wherein the safe motion range is determined from the maximum lateral acceleration and a geometry of the next road segment.

Example 59 is the non-transient computer readable media of any one of Examples 54 to 58, wherein the safe motion range further depends on a vehicle type of the vehicle, a type of tires on the vehicle, and the expected speed of the vehicle.

Example 60 is the non-transient computer readable media of any one of Examples 54 to 59, wherein the first road condition includes a road friction determined based on at least one of a tire friction, a velocity, a pose, and/or a tire pressure of the vehicle.

Example 61 is the non-transient computer readable media of any one of Examples 54 to 60, wherein the second road condition is determined based on at least one of a road surface type, a road moisture level, a road geometry of the next road segment.

Example 62 is the non-transient computer readable media of any one of Examples 54 to 61, wherein the second road condition is determined based on road condition information obtained from other vehicles about the next road segment.

Example 63 is the non-transient computer readable media of any one of Examples 54 to 62, the first road condition is determined based on data from a sensor on the vehicle, wherein the sensor includes at least one of a tire friction sensor, a tire pressure sensor, a camera, a LiDAR, a vehicle position sensor, a vehicle speed sensor, an accelerometer, and/or a gyroscope.

Example 64 is the non-transient computer readable media of any one of Examples 54 to 63, wherein the safety restriction includes a warning message provided in and/or on the vehicle, wherein the warning message includes a dashboard indicator light, a chime, and/or a spoken message.

Example 65 is the non-transient computer readable media of any one of Examples 54 to 64, wherein the safety restriction includes a vehicle adjustment instruction, wherein the vehicle is configured to adjust a driving system based on the vehicle adjustment instruction.

Example 66 is the non-transient computer readable media of Example 65, wherein the driving system includes at least one of a braking system, a steering system, and/or an acceleration system of the vehicle, and wherein the vehicle adjustment instruction includes at least one of a braking instruction, a turning instruction, an acceleration instruction and/or a deceleration instruction.

Example 67 is the non-transient computer readable media of any one of Examples 54 to 66, wherein the second road condition for the next road segment is further based on map information, wherein the map information includes at least one of a friction coefficient, a safe velocity, a safe acceleration, and/or a road geometry of the next road segment.

Example 68 is the non-transient computer readable media of Example 67, wherein the method also includes storing the map information by road segments and updating the map information in the map database that is associated with the next road segment based on the safe motion range.

Example 69 is the non-transient computer readable media of any one of Examples 54 to 68, wherein the object-based safety parameter includes, in relation to an object proximate the vehicle, at least one of a longitudinal distance to the object, a lateral distance to the object, a visibility level at the object, and/or an avoidance scheme in relation to the object.

Example 70 is the non-transient computer readable media of any one of Examples 54 to 69, wherein the method also includes adjusting the object-based safety parameter based on the safe motion range.

Example 71 is the non-transient computer readable media of any one of Examples 54 to 70, wherein the method also includes storing responsibility-sensitive safety parameters and adjusting the responsibility-sensitive safety parameters based on the safe operating parameter.

Example 72 is an apparatus for controlling the safety of a vehicle. The apparatus includes a means for determining a first road condition experienced by a vehicle operating on a current road segment. The apparatus also includes a means for determining a second road condition for a next road segment, wherein the next road segment is based on an expected trajectory of the vehicle. The apparatus also includes a means for determining, based on the first road condition and the second road condition, a safe motion range of the vehicle in the next road segment. The apparatus also includes a means for implementing a safety restriction if an expected motion of the vehicle in the next road segment is outside the safe motion range, wherein the safety restriction depends on an object-based safety layer parameter.

Example 73 is the apparatus of Example 72, wherein the first road condition includes a road friction experienced by the vehicle on the current road segment.

Example 74 is the apparatus of either of Examples 72 or 73, wherein the safe motion range includes at least one of a safe velocity range, a safe acceleration range, and/or a safe jerk range of the vehicle in the next road segment.

Example 75 is the apparatus of any one of Examples 72 to 74, wherein the further includes a means for determining a domain of operational parameters for the vehicle in the next road segment, wherein the domain of operational parameters includes at least one of an acceleration limit, a speed limit, a motion or behavior assumption for other traffic participants, and/or a motion or behavior assumption for the vehicle in the next road segment, and wherein the domain of operating parameters depends on at least one of the first road condition, the second road condition, and/or a current domain of operating parameters for the vehicle.

Example 76 is the apparatus of any one of Examples 72 to 75, wherein the safe motion range includes a maximum lateral acceleration that is lateral to the expected trajectory of the vehicle and a maximum longitudinal acceleration that is along the expected trajectory of the vehicle, wherein the safe motion range is determined from the maximum lateral acceleration and a geometry of the next road segment.

Example 77 is the apparatus of any one of Examples 72 to 76, wherein the safe motion range further depends on a vehicle type of the vehicle, a type of tires on the vehicle, and the expected speed of the vehicle.

Example 78 is the apparatus of any one of Examples 72 to 77, wherein the first road condition includes a road friction determined based on at least one of a tire friction, a velocity, a pose, and/or a tire pressure of the vehicle.

Example 79 is the apparatus of any one of Examples 72 to 78, wherein the second road condition is determined based on at least one of a road surface type, a road moisture level, a road geometry of the next road segment.

Example 80 is the apparatus of any one of Examples 72 to 79, wherein the second road condition is determined based on road condition information obtained from other vehicles about the next road segment.

Example 81 is the apparatus of any one of Examples 72 to 80, the means for determining the first road condition includes at least one of a tire friction sensor, a tire pressure sensor, a camera, a LiDAR, a vehicle position sensor, a vehicle speed sensor, an accelerometer, and/or a gyroscope.

Example 82 is the apparatus of any one of Examples 72 to 81, wherein the safety restriction includes a warning message provided in and/or on the vehicle, wherein the warning message includes a dashboard indicator light, a chime, and/or a spoken message.

Example 83 is the apparatus of any one of Examples 72 to 82, wherein the safety restriction includes a vehicle adjustment instruction, wherein the apparatus further includes a means for adjusting a driving system based on the vehicle adjustment instruction.

Example 84 is the apparatus of Example 83, wherein the means for adjusting the driving system includes at least one of a braking system, a steering system, and/or an acceleration system of the vehicle, and wherein the vehicle adjustment instruction includes at least one of a braking instruction, a turning instruction, an acceleration instruction and/or a deceleration instruction.

Example 85 is the apparatus of any one of Examples 72 to 84, wherein the second road condition for the next road segment is further based on map information, wherein the map information includes at least one of a friction coefficient, a safe velocity, a safe acceleration, and/or a road geometry of the next road segment.

Example 86 is the apparatus of Example 85, wherein the apparatus further includes a means for storing the map information by road segments, and wherein apparatus further includes a means for updating the map information that is associated with the next road segment based on the safe motion range.

Example 87 is the apparatus of any one of Examples 72 to 86, wherein the object-based safety parameter includes, in relation to an object proximate the vehicle, at least one of a longitudinal distance to the object, a lateral distance to the object, a visibility level at the object, and/or an avoidance scheme in relation to the object.

Example 88 is the apparatus of any one of Examples 72 to 87, wherein the apparatus further includes a means for adjusting the object-based safety parameter based on the safe motion range.

Example 89 is the apparatus of any one of Examples 72 to 88, wherein the apparatus further includes a means for storing responsibility-sensitive safety parameters and a means for adjusting the responsibility-sensitive safety parameters based on the safe operating parameter.

While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

**Claims**

1. A vehicle control system comprising:
   a processor configured to:

   determine a first road condition experienced by a vehicle operating on a current road segment;
   determine a second road condition for a next road segment, wherein the next road segment is based on an expected trajectory of the vehicle;
   determine, based on the first road condition and the second road condition, a safe motion range of the vehicle in the next road segment; and
   implement a safety restriction if an expected motion of the vehicle in the next road segment is outside the safe motion range, wherein the safety restriction depends on an object-based safety layer parameter.

2. The vehicle control system of claim 1, wherein the first road condition comprises a road friction experienced by the vehicle on the current road segment.

3. The vehicle control system of any one of claims 1 or 2, wherein the safe motion range comprises at least one of a safe velocity range, a safe acceleration range, and/or a safe jerk range of the vehicle in the next road segment.

4. The vehicle control system of any one of claims 1 to 3, wherein the processor is further configured to determine a domain of operational parameters for the vehicle in the next road segment, wherein the domain of operational parameters comprises at least one of an acceleration limit, a speed limit, a motion or behavior assumption for other traffic participants, and/or a motion or behavior assumption for the vehicle in the next road segment, and wherein the domain of operating parameters depends on at least one of the first road condition, the second road condition, and/or a current domain of operating parameters for the vehicle.

5. The vehicle control system of any one of claims 1 to 4, wherein the safe motion range comprises a maximum lateral acceleration that is lateral to the expected trajectory of the vehicle and a maximum longitudinal acceleration that is along the expected trajectory of the vehicle, wherein the safe motion range is determined from the maximum lateral acceleration and a geometry of the next road segment.

6. The vehicle control system of any one of claims 1 to 5, wherein the safe motion range further depends on a vehicle type of the vehicle, a type of tires on the vehicle, and the expected speed of the vehicle.

7. The vehicle control system of any one of claims 1 to 6, wherein the first road condition comprises a road friction determined based on at least one of a tire friction, a velocity, a pose, and/or a tire pressure of the vehicle; and/or wherein the second road condition is determined based on at least one of a road surface type, a road moisture level, a road geometry of the next road segment.

8. The vehicle control system of any one of claims 1 to 7, wherein the second road condition is determined based on road condition information obtained from other vehicles about the next road segment.

9. The vehicle control system of any one of claims 1 to 8, the first road condition is determined based on data from a sensor on the vehicle, wherein the sensor comprises at least one of a tire friction sensor, a tire pressure sensor, a camera, a Light Detection and Ranging (LiDAR), a vehicle position sensor, a vehicle speed sensor, an accelerometer, and/or a gyroscope.

10. The vehicle control system of any one of claims 1 to 9, wherein the safety restriction comprises a warning message provided in and/or on the vehicle, wherein the warning message comprises a dashboard indicator light, a chime, and/or a spoken message.

11. The vehicle control system of any one of claims 1 to 10, wherein the safety restriction comprises a vehicle adjustment instruction, wherein the vehicle is configured to adjust a driving system based on the vehicle adjustment instruction; wherein preferably the driving system comprises at least one of a braking system, a steering system, and/or an acceleration system of the vehicle, and wherein the vehicle adjustment instruction comprises at least one of a braking instruction, a turning instruction, an acceleration instruction and/or a deceleration instruction.

12. The vehicle control system of any one of claims 1 to 11, wherein the second road condition for the next road segment is further based on map information, wherein the map information comprises at least one of a friction coefficient, a safe velocity, a safe acceleration, and/or a road geometry of the next road segment; preferably the vehicle control system further comprising a map database configured to store the map information by road segments, wherein the map database is further configured to update the map information in the map database that is associated with the next road segment based on the safe motion range.

13. The vehicle control system of any one of claims 1 to 12, wherein the object-based safety parameter comprises, in relation to an object proximate the vehicle, at least one of a longitudinal distance to the object, a lateral distance to the object, a visibility level at the object, and/or an avoidance scheme in relation to the object.

14. The vehicle control system of any one of claims 1 to 13, wherein the processor is further configured to adjust the object-based safety parameter based on the safe motion range.

15. The vehicle control system of any one of claims 1 to 14, further comprising a responsibility-sensitive safety circuitry configured to store responsibility-sensitive safety parameters, the responsibility-sensitive safety circuitry further configured to adjust the responsibility-sensitive safety parameters based on the safe operating parameter.

FIG. 1A

FIG. 1B

200

Verify/Select Operational Domain for
Current Road Segment —210

Calculate Safe Movement in
Next Road Segment —220

Implement Restriction to
Ensure Safe Movement —230

FIG. 2

300

Map Information System — 360

370 — Communication System

Domain Selector — 310

Safe Motion Calculator — 320

Driving Policy Layer

340

350 — Object-Based Safety Layer

Motion Restrictor

330

FIG. 3

400

Processor — 404

402

Sensor — 406

Map Database — 408

FIG. 4

500

510 — Determining a first road condition experienced by a vehicle operating on a current road segment

520 — Determining a second road condition for a next road segment, wherein the next road segment is based on an expected trajectory of the vehicle

530 — Determining, based on the first road condition and the second road condition, a safe motion range of the vehicle in the next road segment

540 — Implementing a safety restriction if an expected motion of the vehicle in the next road segment is outside the safe motion range, wherein the safety restriction depends on an object-based safety layer parameter

FIG. 5

Europäisches
Patentamt

European
Patent Office

Office européen
des brevets

# EUROPEAN SEARCH REPORT

Application Number

**EP 22 16 2063**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/223443 A1 (GONZALEZ AGUIRRE DAVID [US] ET AL) 16 July 2020 (2020-07-16) | 1-9, 11-15 | INV. B60W10/04 |
| Y | * paragraphs [0041], [0076] - [0078], [0104] - [0112], [0129] - [0145], [0264] - [0271]; claims * | 10 | B60W10/184 B60W10/20 B60W30/02 B60W30/095 |
| Y | DE 10 2015 212673 A1 (BOSCH GMBH ROBERT [DE]) 12 January 2017 (2017-01-12) * paragraphs [0002] - [0007] * | 10 | B60W30/14 B60W30/18 B60W50/14 |
| X | US 2017/166216 A1 (RANDER PETER [US] ET AL) 15 June 2017 (2017-06-15) * paragraphs [0078] - [0080], [0084] - [0087], [0091], [0097] - [0099] * | 1-4,6-9, 11-15 | ADD. B60K31/00 |
| A | EP 2 537 727 A1 (VOLVO CAR CORP [SE]) 26 December 2012 (2012-12-26) * paragraphs [0006], [0007] * | 1-15 | |

|  |
|---|
| **TECHNICAL FIELDS SEARCHED (IPC)** |
| B60W |

The present search report has been drawn up for all claims

| Place of search | Date of completion of the search | Examiner |
|---|---|---|
| Munich | 24 August 2022 | Nielles, Daniel |

EPO FORM 1503 03.82 (P04C01)

## ANNEX TO THE EUROPEAN SEARCH REPORT
## ON EUROPEAN PATENT APPLICATION NO.

EP 22 16 2063

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2022

| Patent document cited in search report | | Publication date | Patent family member(s) | | Publication date |
|---|---|---|---|---|---|
| US 2020223443 | A1 | 16-07-2020 | CN EP US | 113511213 A 3885219 A1 2020223443 A1 | 19-10-2021 29-09-2021 16-07-2020 |
| DE 102015212673 | A1 | 12-01-2017 | NONE | | |
| US 2017166216 | A1 | 15-06-2017 | NONE | | |
| EP 2537727 | A1 | 26-12-2012 | CN EP US | 102837703 A 2537727 A1 2012326856 A1 | 26-12-2012 26-12-2012 27-12-2012 |

EPO FORM P0459

For more details about this annex : see Official Journal of the European Patent Office, No. 12/82